(19) Europäisches Patentamt

European Patent Office

Office européen des brevets

(11) **EP 0 518 284 B1**

## (12) EUROPEAN PATENT SPECIFICATION

(45) Date of publication and mention
of the grant of the patent:
**13.11.1996   Bulletin 1996/46**

(51) Int Cl.6: **G01T 3/00**, H01J 47/12

(21) Application number: **92109733.3**

(22) Date of filing: **10.06.1992**

(54) **Gamma-ray compensated ionization chamber**

Gammastrahlen kompensierende Ionisationskammer

Chambre d'ionisation compensant les rayons gamma

(84) Designated Contracting States:
**DE FR GB**

(30) Priority: **10.06.1991   JP 163342/91**

(43) Date of publication of application:
**16.12.1992   Bulletin 1992/51**

(73) Proprietor: **MITSUBISHI DENKI KABUSHIKI
KAISHA
Tokyo (JP)**

(72) Inventor: **Oda, Minoru,, c/o Seigyo Seisakusho,
MITSUBISHI
Kobe-shi, Hyogo-ken (JP)**

(74) Representative: **Sajda, Wolf E., Dipl.-Phys. et al
MEISSNER, BOLTE & PARTNER
Widenmayerstrasse 48
80538 München (DE)**

(56) References cited:
**US-A- 4 682 036**

- **PATENT ABSTRACTS OF JAPAN, unexamined
  applications, P field, vol. 9, no. 210, August 28,
  1985 THE PATENT OFFICE JAPANESE
  GOVERNMENT page 92 P 383 Kokai-no. 60-71
  975**
- **SOVIET INVENTIONS ILLUSTRATED, section EI,
  week 8441, November 21, 1984 DERWENT
  PUBLICATIONS LTD., London, S 03 SU-A-999
  863**
- **SOVIET INVENTIONS ILLUSTRATED, section EI,
  week 8444, December 12, 1984 DERWENT
  PUBLICATIONS LTD., London, S 03 SU-A-1005
  594**

## Description

The present invention relates to a gamma-ray compensated ionization apparatus for measuring neutron flux from a neutron current detected by a central electrode, wherein a gamma-ray ionization current flowing in a neutron ionization chamber from a first electrode to the central electrode is compensated by a gamma-ray ionization current flowing in a compensation chamber in the opposite direction from a third electrode to the central electrode, wherein both the first and third electrodes are spaced at a preset distance to the central electrode and the compensated ionization apparatus comprises means for compensating the gamma-ray ionization currents; and means for varying the voltage ratio of the first and third electrodes to equalize the oppositely directed gamma-ray currents flowing in the chambers.

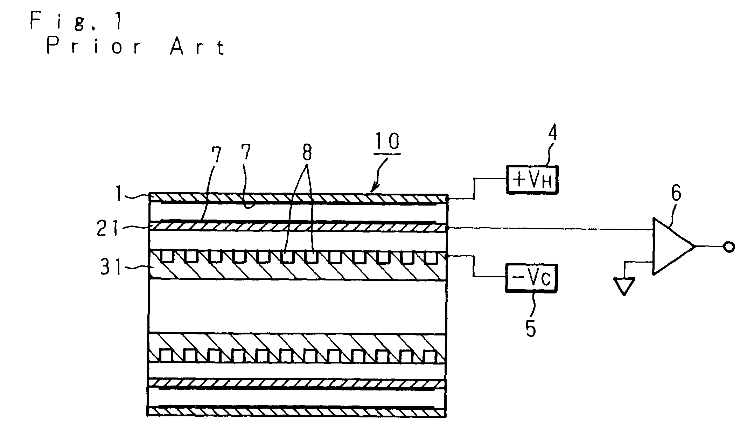

Such a conventional gamma-ray compensated ionization apparatus is known, for example, from the publication Patent Abstracts of Japan, unexamined applications, P Field, Vol.9, No. 210 of August 28, 1985, and the corresponding Japanese publication JP-A-60-71975. The conventional apparatus deals with the problem of compensating an electric current arising from ionization in the device caused by gamma-rays, wherein compensation means are provided by grooves in the third electrode in order to eliminate or reduce the negative effect of gamma-ray currents on the measurement of neutron flux. The situation is described in more detail below with reference to Fig. 1 of the accompanying drawings.

The document SOVIET INVENTIONS ILLUSTRATED, Section E1, week 8441 of November 21, 1984 published by DERWENT PUBLICATIONS LTD., London, page 3 and corresponding to the Russian publication SU-A-999 863 (Aksenor V.A.), discloses a neutron ionization chamber for a nuclear reactor control system which is provided with through openings located in the collector electrode, wherein the openings have a diameter much less than the electrode thickness. With openings having such a small diameter, no electric field breaks into the holes, which results in that the electric charge generated by ionization is not completely collected as required.

Fig. 1 is a schematic longitudinal section showing the construction of a conventional gamma-ray compensated ionization chamber (hereinafter abbreviated as CIC) disclosed, for example, in "Measurements of Nuclear Radiation" (pp. 98-102, Nikkan Kogyo Shimbun, Inc., 1978). As shown in Fig. 1, the CIC 10 comprises three cylindrical electrodes disposed concentrically: a high-voltage electrode 1 as the outermost electrode; a signal electrode 21 disposed inwardly spaced apart from the high-voltage electrode 1; and a compensating electrode 31 disposed inwardly spaced apart from the signal electrode 21.

A high-voltage power supply 4 applies a high voltage +VH to the high-voltage electrode 1, while a compensating power supply 5 applies a compensating voltage -Vc to the compensating electrode 31. A neutron current obtained from the signal electrode 21 is amplified through an amplifier 6. The inside surface of the high-voltage electrode 1 and the outside surface of the signal electrode 21 are coated with a neutron-sensitive material 7 such as $10_B$. The outside surface of the compensating electrode 31 is provided with a plurality of circumferentially extending grooves 8.

In operation, when gamma rays emitted by a nuclear reaction and neutrons are radiated to the CIC 10, a neutron current In caused by the neutron-sensitive material 7 and a current $I_\gamma 1$ caused by the gamma rays flow through the space (neutron ionization chamber) between the high voltage electrode 1 and the signal electrode 21. At the same time, another gamma-ray current $I_\gamma 2$ flows through the space (compensating ionization chamber) between the signal electrode 21 and the compensating electrode 31.

Since the voltages applied from the high-voltage power supply 4 and the compensating power supply 5, respectively, connected to the high-voltage electrode 1 and the compensating electrode 31, are opposite in polarities to each other, the ionization currents flowing in the two respective chambers flow in opposite directions to each other with respect to the signal electrode 21. When the current flowing to the signal electrode 21 is denoted as Isig, the following equation is given:

$$\text{Isig} = \text{In} + I_\gamma 1 - I_\gamma 2 \qquad (1).$$

If $I_\gamma 1$ and $I_\gamma 2$ are equal, we have

$$\text{Isig} = \text{In} \qquad (2).$$

Thus, the net neutron current which does not contain the gamma ray current can be measured. This operation is a gamma ray compensation employed in the CIC 10. The neutron current In is detected by the signal electrode 21 and is amplified through the amplifier 6.

Since an ionization chamber in which $I_\gamma 1$ and $I_\gamma 2$ are strictly equal is difficult to construct, a large number of narrow grooves 8 are provided on the outer circumferential surface of the compensating electrode 31 so as to exactly equalize $I_\gamma 1$ and $I_\gamma 2$ by controlling the voltage -Vc supplied from the compensating power supply 5. The reason that $I_\gamma 2$ is varied by the grooves 8 on the outside surface of the compensating electrode 31 is as follows.

Since the electric field strength inside the groove 8 is weak, ionized electrons are not completely collected and an ineffective portion that does not effectively function as an ionization chamber is left. The volume of this ineffective portion depends on the compensating voltage Vc supplied from the compensating power supply 5; it decreases as the voltage Vc increases. Therefore, the effective volume of the ionization chamber is varied by controlling the compensating voltage Vc so as to equalize $I_\gamma 1$ and $I_\gamma 2$.

In the above construction of the conventional gamma-ray compensated ionization chamber, since the gamma rays are compensated by controlling the compensating voltage Vc, the volume of the ineffective portion resulting from the weak field strength inside the grooves 8 is unstable. Depending on this unstable factor varying the effective volume of the ionization chamber, the problem arises that the compensating conditions vary with changes in external conditions such as the intensity and energy of gamma rays, thus resulting in overcompensation or undercompensation.

The object underlying the present invention is to provide a gamma-ray compensated ionization apparatus for measuring neutron flux which has an improved measuring capability in that the unwanted gamma-ray currents are better compensated in order to provide a more accurate neutron flux measurement.

The object is solved in a satisfying manner by a gamma-ray compensated ionization apparatus of the type specified above which is characterized in that the compensating means comprise a plurality of holes formed in the central electrode allowing an electric force communication between the first and third electrodes, in that the diameter of the holes is one to three times greater than the preset distance between the electrodes, and in that the amount of effective volume in the chambers for gamma-ray compensation is proportional to the total of the circumferential edge length of the holes.

In one specific embodiment of the apparatus according to the invention, the holes are circular. In another specific embodiment of the apparatus according to the invention, the holes are oval or elliptic.

According to a further development of the apparatus according to the invention, the circumferential edge of the respective holes is tapered.

In one specific embodiment of the apparatus according to the invention, the three electrodes are cylindrical. In another specific embodiment of the apparatus according to the invention, the three electrodes are flat.

The invention will be explained in more detail below with reference to preferred embodiments and the accompanying drawings.

## BRIEF DESCRIPTION OF THE DRAWINGS

Fig. 1 is a schematic longitudinal section showing the construction of a conventional CIC,

Fig. 2 is a schematic longitudinal section showing the construction of a CIC according to a first embodiment of the present invention,

Fig. 3 is a partial perspective view showing the CIC according to the first embodiment of the present invention,

Fig. 4 is a diagram illustrating the principle of the CIC of the present invention,

Fig. 5 is a partial perspective view showing a CIC according to a second embodiment of the present invention, and

Fig. 6 is a partial perspective view showing a CIC according to a third embodiment of the present invention.

## DESCRIPTION OF THE PREFERRED EMBODIMENTS

### Embodiment 1

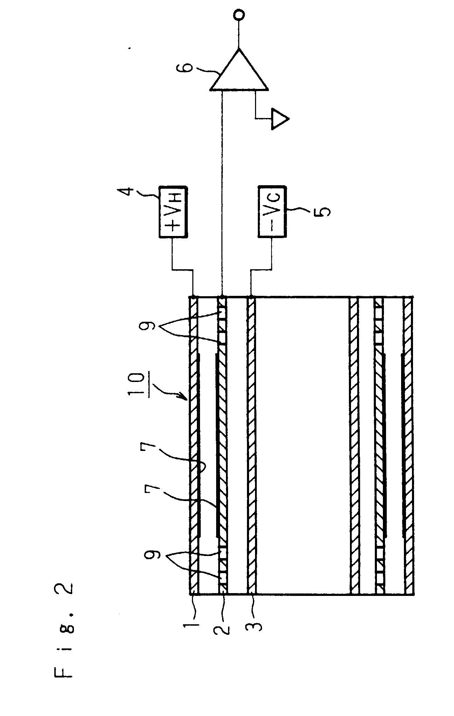

Fig. 2 is a schematic diagram showing the construction of a CIC according to the first embodiment of the present invention in a longitudinal section. As shown in Fig. 2, the CIC 10 comprises three cylindrical electrodes disposed concentrically: a high-voltage electrode 1 as the outermost electrode; a signal electrode 2 disposed inwardly spaced apart from the high-voltage electrode 1; and a compensating electrode 3 disposed inwardly spaced apart from the signal electrode 2.

A high-voltage power supply 4 applies a high voltage +VH to the high-voltage electrode 1, while a compensating power supply 5 applies a compensating voltage -Vc to the compensating electrode. The neutron current detected by the signal electrode 2 is amplified through an amplifier 6.

The inside surface of the high-voltage electrode 1 and the outside surface of the signal electrode 2 are coated with a neutron-sensitive material 7 such as $10_B$. A plurality of small-diameter holes 9 are formed in both axially endmost portions of the signal electrode 2.

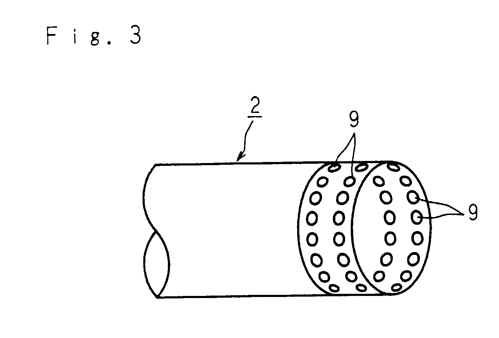

In this embodiment, 48 holes 9 of 5mm diameter are formed. Fig. 3 is a perspective view showing one of the endmost portions of the signal electrode 2 with the holes 9 formed therein.

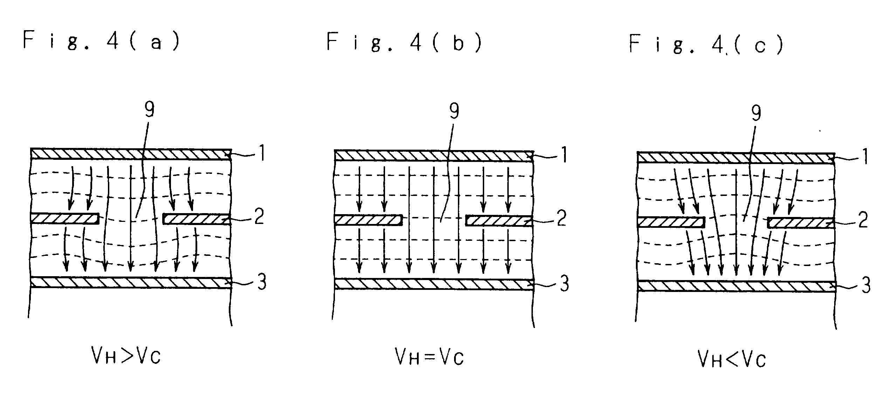

The operation of the above CIC will now be described. Fig. 4 is a diagram illustrating the operation principle of the first embodiment with an electric field formed around one of the holes 9 in the signal electrode 2, wherein dashed lines indicate equipotential lines and solid lines designate electric force lines. Fig. 4(a) illustrates the case where the voltage VH from the high-voltage power supply 4 is higher than the voltage Vc from the compensating power supply 5, in other words for VH > Vc, Fig. 4(b) illustrates the situation for VH = Vc, and Fig. 4(c) illustrates the situation for VH < Vc.

As shown in Figs. 4(a), 4(b), 4(c), the form of the electric field around a hole 9 in the signal electrode 2 changes when the magnitude of Vc changes relative to VH, which causes a difference in the substantial volume between the effective portion of the neutron ionization chamber in the upper part of the figure and that of the compensating ionization chamber in the lower part.

More specifically, in the space surrounded by the electric force lines passing through the hole 9, the ionized electrons are not collected by the signal electrode 2 and the ionization current flows from the high-voltage electrode 1 toward the compensating electrode 2. Therefore, an ineffective portion is formed which does not contribute to the detection of the neutron current.

Since the ineffective volume in the neutron ionization chamber and compensating ionization chamber differs or varies according to the change in the relationship between VH and Vc (more properly, the voltage ratio: VH/Vc), controlling of the effective volume becomes possible. Since the control of the effective volume utilizing the above effect does not rely on unstable factors such as the ineffective volume created by the weak field strength inside the grooves 8, as in the conventional CIC of Fig. 1, the arrangement of this embodiment can achieve a stable gamma-ray compensation.

In the above arrangement, the controllable amount of the effective volume is substantially proportional to the total amount of peripheral lengths of the holes 9. Therefore, in order to increase the controllable amount, it is more preferable to form a large number of small-diameter holes, thereby increasing the total amount of peripheral lengths, rather than to form a small number of large-diameter holes. The proper diameter of the holes 9 is about one to three times as long as the distance in space between the electrodes.

Embodiment 2

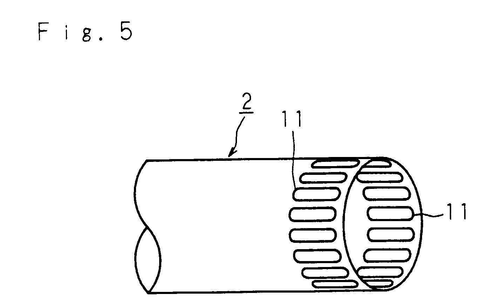

Fig. 5 is a perspective view showing one end portion of a signal electrode 2 in a CIC according to the second embodiment of the invention. In this embodiment, instead of the holes 9 in the first embodiment, a plurality of elliptic slits 11 are formed circumferentially around the signal electrode 2 in the endmost portions thereof. The evenly spaced, nearly parallel slits 11 formed along the circumference are an effective configuration to increase the total peripheral lengths thereof. This configuration is also proper to maintain the mechanical strength of the signal electrode 2.

Embodiment 3

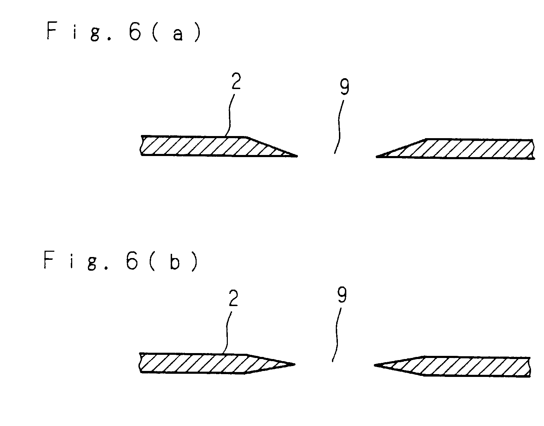

Figs. 6(a) and 6(b) are cross sectional views showing a portion of a signal electrode 2 in a CIC according to the third embodiment of the invention. In the shown configurations of this embodiment, the periphery of each hole 9 is tapered so as to eliminate weak electric field slightly occurs near the inside the hole 9. These configurations serve to further enhance the stability of the gamma-ray compensation.

Embodiment 4

In the foregoing embodiments 1, 2 and 3, the high voltage electrode 1, the signal electrode 2, and the compensating electrode 3 are cylindrical electrodes disposed concentrically, but alternatively, these electrodes may be flat.

**Claims**

1.  A gamma-ray compensated ionization apparatus for measuring neutron flux from a neutron current detected by a central electrode (2), wherein a gamma-ray ionization current flowing in a neutron ionization chamber from a first electrode (1) to the central electrode (2) is compensated by a gamma-ray ionization current flowing in a compensation chamber in the opposite direction from a third electrode (3) to the central electrode (2), wherein both the first and third electrodes (1, 3) are spaced at a preset distance to the central electrode (2) and the compensated ionization apparatus comprises:

    -   means for compensating the gamma-ray ionization currents; and
    -   means for varying the voltage ratio (VH/Vc) of the first and third electrodes (1, 3) to equalize the oppositely directed gamma-ray currents ($I_\gamma 1$, $I_\gamma 2$) flowing in the chambers;

    characterized

    in that the compensating means comprise a plurality of holes (9, 11) formed in the central electrode (2) allowing an electric force communication between the first and third electrodes (1, 3),
    in that the diameter of the holes (9, 11) is one to three times greater than the preset distance between the first and third electrodes (1, 3) and the central electrode (2),
    and in that the amount of effective volume in the chambers for gamma-ray compensation is proportional to the total of the circumferential edge length of the holes (9, 11).

2.  The apparatus according to claim 1, wherein the holes (9) are circular.

3.  The apparatus according to claim 1, wherein the holes (11) are oval or elliptic.

4.  The apparatus according to any of claims 1 to 3, wherein the circumferential edge of the respective holes (9) is tapered.

5.  The apparatus according to any of claims 1 to 4,

wherein the three electrodes (1, 2, 3) are cylindrical.

6. The apparatus according to any of claims 1 to 4, wherein the three electrodes (1, 2, 3) are flat.


**Patentansprüche**

1. Ionisationsvorrichtung mit Gammastrahlenkompensation zur Messung der Neutronenstromdichte eines Neutronenstromes, der von einer zentralen Elektrode (2) gemessen wird, wobei ein Gammastrahlen-Ionisationsstrom, welcher in einer Neutronenionisationskammer von einer ersten Elektrode (1) zu der zentralen Elektrode (2) fließt, mit einem Gammastrahlen-Ionisationsstrom kompensiert wird, der in einer Kompensationskammer von einer dritten Elektrode (3) in der entgegengesetzten Richtung zu der zentralen Elektrode (2) fließt, wobei die erste Elektrode (1) und die dritte Elektrode (3) in vorbestimmten Abständen zur zentralen Elektrode (2) angeordnet sind und wobei die Ionisationsvorrichtung folgendes aufweist:

   - eine Einrichtung zur Kompensation der Gammastrahlen-Ionisationsströme, und
   - eine Einrichtung zur Änderung des Spannungsverhältnisses (VH/Vc) zwischen der ersten Elektrode (1) und der dritten Elektrode (3) zum Ausgleichen der in den Kammern fließenden, entgegengesetzt gerichteten Gammastrahlenströme ($I_{\gamma1}$, $I_{\gamma2}$),

   dadurch gekennzeichnet,

   daß die Kompensationseinrichtung eine Vielzahl von Löchern aufweist, die in der zentralen Elektrode (2) ausgebildet sind und die zwischen der ersten Elektrode (1) und der dritten Elektrode (3) eine Wechselwirkung der elektrischen Kräfte ermöglichen,
   daß der Durchmesser der Löcher (9, 11) das Ein- bis Dreifache der vorbestimmten Abstände zwischen der ersten Elektrode (1) und der dritten Elektrode (3) sowie der zentralen Elektrode (2) ausmacht,
   und daß der Wert des effektiven Volumens in den Kammern für die Gammastrahlen-Kompensation proportional zur Gesamtheit der Kantenlänge in Umfangsrichtung der Löcher (9, 11) ist.

2. Vorrichtung nach Anspruch 1, wobei die Löcher kreisförmig sind.

3. Vorrichtung nach Anspruch 1, wobei die Löcher oval oder elliptisch sind.

4. Vorrichtung nach einem der Ansprüche 1 bis 3, wobei die Umfangskante der jeweiligen Löcher sich verjüngt.

5. Vorrichtung nach einem der Ansprüche 1 bis 4, wobei die drei Elektroden (1, 2, 3) zylindrisch sind.

6. Vorrichtung nach einem der Ansprüche 1 bis 4, wobei die drei Elektroden (1, 2, 3) flach sind.


**Revendications**

1. Appareil d'ionisation compensé en rayons gamma destiné à mesurer un flux neutronique provenant d'un courant neutronique détecté par une électrode centrale (2), dans lequel un courant d'ionisation provoqué par des rayons gamma circulant dans une chambre d'ionisation des neutrons entre une première électrode (1) et l'électrode centrale (2) est compensé par un courant d'ionisation provoqué par des rayons gamma circulant dans une chambre de compensation, en sens inverse, entre une troisième électrode (3) et l'électrode centrale (2), dans lequel les première et troisième électrodes (1, 3) sont toutes deux espacées de l'électrode centrale (2) d'une distance prédéterminée; l'appareil d'ionisation compensée comportant :

   - des moyens pour compenser les courants d'ionisation provoqués par les rayons gamma; et
   - des moyens pour faire varier le rapport de tension (VH / Vc) entre les première et troisième électrodes (1, 3) pour rendre égaux les courants provoqués par les rayons gamma circulant en sens inverse dans les chambres;

   caractérisé

   en ce que les moyens de compensation comportent une pluralité de trous (9, 11) percés dans l'électrode centrale (2) permettant une communication de forces électriques entre les première et troisième électrodes (1, 3),
   en ce que le diamètre des trous (9, 11) est de une à trois fois plus grand que la distance prédéterminée entre les première et troisième électrodes (1,3) et l'électrode centrale (2),
   et en ce que le volume efficace de la chambre de compensation des rayons gamma est proportionnel à la somme des longueurs de pourtour des trous (9, 11).

2. Appareil selon la revendication 1, dans lequel les trous (9) sont circulaires.

3. Appareil selon la revendication 1, dans lequel les trous (11) sont ovales ou elliptiques.

**4.** Appareil selon l'une quelconque des revendications 1 à 3, dans lequel le pourtour des trous respectifs (9) est incliné.

**5.** Appareil selon l'une quelconque des revendications 1 à 4, dans lequel les trois électrodes (1, 2, 3) sont cylindriques.

**6.** Appareil selon l'une quelconque des revendications 1 à 4, dans lequel les trois électrodes (1, 2, 3) sont plates.

Fig. 1
Prior Art

Fig. 2

Fig. 3

EP 0 518 284 B1

Fig. 4 ( a )　　　　Fig. 4 ( b )　　　　Fig. 4 ( c )

$V_H > V_C$　　　　　$V_H = V_C$　　　　　$V_H < V_C$

Fig. 5

Fig. 6(a)

Fig. 6(b)